# EUROPEAN PATENT APPLICATION

(11) **EP 4 446 579 A1**
(43) Date of publication of application: **16.10.2024**
(21) Application number: 23167936.6
(22) Date of filing: 14.04.2023
(51) Int. Cl.: F03D 9/28, F03D 13/25, E21B 33/12, E21B 43/12, E21B 33/128, E21B 17/01

(54) **SUBMERSIBLE WATER PUMP SYSTEM FOR A WIND TURBINE**

(71) Applicant: Siemens Gamesa Renewable Energy A/S, 7330 Brande (DK)
(72) Inventor: Soylu, Mahmut Erbil, 4700 Naestved (DK)
(74) Representative: SGRE-Association

(57) **Abstract**

It is described a submersible pump system for pumping upwards water being used by a wind turbine, in particular seawater (2002) being used by an offshore wind turbine. The submersible pump system comprises (a) a submersible pump (101) having a pump inlet (102) and a pump outlet (103); (b) a riser pipe (104) for transporting upwards the water (2002), wherein the submersible pump (101) is accommodated within a bottom section of the riser pipe (104); and (c) a wireline (109) with a first end and a second end, the first end being connected to the submersible pump (101) and the second end being connectable to a lifting system (110); wherein the riser pipe (104) and the submersible pump (101) are dimensioned such that with the help of the wireline (109) the submersible pump (101) can be moved within the riser pipe (104) upwards and downwards. It is further described a method for pumping upwards water being used by a wind turbine (1000) and a wind turbine with such a submersible pump system.

## Description

### Field of invention

The present invention generally relates to wind turbines which are provided with water for various purposes such as hydrogen generation. Specifically, the present invention relates to a submersible pump system for pumping upwards water being used by a wind turbine. Further, the present invention relates to a method for pumping upwards water being used by a wind turbine and to a wind turbine comprising such a submersible pump system.

### Art Background

Wind turbines comprise components, which during operation heat up and must be cooled in order to avoid damages or at least an increased wear and/or tear. A wind turbine component, which is subjected for heating-up is for instance the electric generator. Heating-up is a particular issue for offshore wind turbines, because an offshore turbine is typically a large wind turbine with a high output of electric power.

Components of offshore wind turbines are typically cooled with seawater. Hence, during operation there is a need to have a constant supply of fresh (sea)water for cooling down the respective wind turbine component. For supplying water, a submersible pump system is normally used which pumps cold seawater into a cooling system being associated with the respective wind turbine component.

Due to the threatening climate change there is a need or better a must for a worldwide decarbonization of the energy supply. This means that mineral fossils have to be replaced with green fuels. One approach for generating green fuels is based on the generation of hydrogen by means of water electrolysis. An electric power source being suitable for water electrolysis is a wind turbine and in particular an offshore wind turbine.

An approach for an efficient decarbonization is to use a wind turbine for producing hydrogen in time slots where there is a surplus of electric energy in an electric power grid. Specifically, the mechanic wind energy for driving a wind turbine can be captured whenever wind is available. It the generated electric power is not needed by the grid it can be used to produce hydrogen, which can be stored in appropriate vessels and/or gas pipe systems. This means that there is a dual use for a wind turbine, namely producing electric energy for a power grid and for hydrogen generation. However, since hydrogen generation may become more and more important in the future there have also been proposed single use wind turbines which are only used for hydrogen production.

For any offshore wind turbine seawater can be used both for cooling wind turbine components and for supplying water for a water electrolysis. Further, seawater can also be used for desalting in order to produce fresh water. The electric energy for a desalting process can also be provided by a wind turbine. In this case the wind turbine can be even a triple use wind turbine, wherein hydrogen production and/or desalting is carried out in time slots where there is a surplus of electric energy. Thereby, the two use cases where a submersible pump system is needed is hydrogen production and desalting.

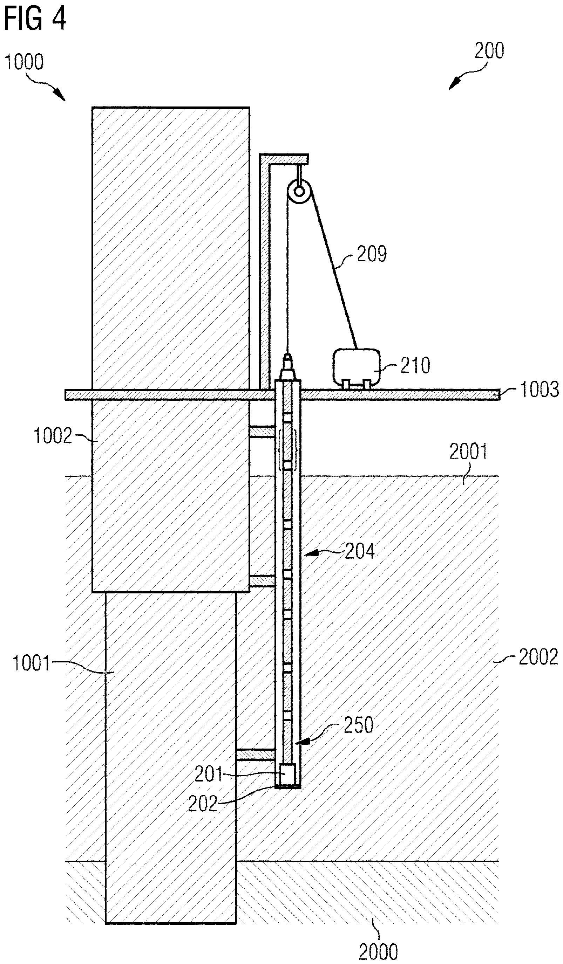

A submersible pump system 200 according to the state of the art is shown in **Figure 4****.** The submersible pump system 200 is used for pumping seawater 2002 upwards above sea level 2001. The submersible pump system 200 is attached to a platform 1003 of or for the offshore wind turbine 1000. The wind turbine is erected in a known matter on a monopile 1001 which has been driven into the seafloor 2000. The platform 1003 is mounted to a transition piece 1002 of the wind turbine 1000. The transition piece 1002 is a known structure which mechanically connects the monopile 1001 with a not depicted tower of the (not completely depicted) wind turbine 1000. The platform 1003 is placed at some distance above the sea level 2001. To bring the seawater 2002 at a level of the platform 1003, the submersible pump system 200 is provided.

The submersible pump system 200 comprises a submersible pump 201 placed on a bottom plate 202 of a riser pipe or caisson 204. The bottom plate 202 is located below the sea level 2001. An outlet of the submersible pump 201 is connected to a tubing structure 250, which is provided in the interior of the riser pipe 204. A wireline 209 is provided which has a first end connected to the submersible pump 201 and a second end connected to a lifting system 210. The wireline 209 is configured to, on the one side, provide electrical connection to the submersible pump 201 and, on the other side, to enable an insertion and extraction of the submersible pump 201 in or out of the riser pipe 204 in particular for installation and pump maintenance purposes.

Prior to inserting respectively lowering as well as prior to extracting the submersible pump 201, it is therefore necessary to remove the tubing structure 250, thus making the procedure time consuming, expensive and complicated. This is a disadvantage in particular in the context of routine maintenance of the submersible pump 201.

### Summary of the invention

There may be a need for providing a submersible pump system, which allows for an easy and effective installation and maintenance of its submersible pump.

According to a first aspect of the present invention there is provided a submersible pump system for pumping upwards water being used by a wind turbine, in particular seawater being used by an offshore wind turbine. The submersible pump system comprises (a) a submersible pump having a pump inlet and a pump outlet; (b) a riser pipe for transporting upwards the water, wherein the submersible pump is accommodated within a bottom section of the riser pipe; and (c) a wireline with a first end and a second end, the first end being connected to the submersible pump and the second end being connectable to a lifting system; wherein the riser pipe and the submersible pump are dimensioned such that with the help of the wireline the submersible pump can be moved within the riser pipe upwards and downwards.

The described submersible pump system is based on the idea that in the interior of the riser pipe there is no need to provide any structure which could impede a movement of the submersible along the longitudinal dimension of the riser pipe. In particular, since the riser pipe itself is configured for transporting the water the riser pipe may be free from any additional (solid) tubing structure which may carry the (transported) water and which may block or at least impede an occasional movement of the submersible pump within the riser tube.

The described submersible pump system may provide the advantage that an insertion and/or an extraction of the submersible pump is very simple. As a consequence any maintenance work which is associated with any kind of movement of the submersible pump is facilitated significantly. This is because there is in particular no need to remove such an additional tubing structure before moving the submersible pump upwards and downwards along the riser pipe. Hence, any work, e. g. installation and maintenance work of the submersible pump system, which work includes a movement of the submersible pump within the riser pipe, can be carried out in an easy, time saving and cost saving manner.

In this document the term "submersible pump" refers to a pump for pumping any kind of water. In preferred applications the submersible pump is resistant to salt and hence is configured for pumping seawater. Depending on the installation depth below the water level the submersible pump is designed such that it can withstand the respective hydrostatic pressure at the installation depth.

In accordance with the present disclosure the submersible pump may be suspended by means of the wireline. For mechanically connecting the (lower) first end of the wireline with the submersible pump any detachable connection means such as a hook, a bayonet closure, etc. may be employed.

According to an embodiment of the invention the bottom section of the riser pipe is configured for maintaining a pressure difference between the pump outlet and the pump inlet. This may allow for preventing an unwanted reflow of water along a pressure gradient or pressure difference from the pump outlet to the pump inlet. This may make a significant contribution for achieving a highly effective pumping procedure.

The described pressure difference may be realized simply by geometrically dimensioning the inner cross section of the bottom section of the riser tube and (a housing of) the submersible pump such that the submersible pump (housing) closes the bottom section.

According to a further embodiment of the invention the bottom section of the riser pipe comprises a pressure separation device.

Using a dedicated pressure separation device for maintaining the above mentioned pressure difference may allow for effectively separating the high pressure region being associated with the pump outlet from the low pressure region being associated with the pump inlet in a simple but effective manner. Such a particular effective pressure difference separation may make a further contribution for an efficient pumping procedure.

According to a further embodiment of the invention the pressure separation device comprises an inflatable element.

The inflatable element may be any structure which, upon been filled and pressurized with a proper fluid, can separate the above mentioned high pressure region being associated with the pump outlet from the above mentioned low pressure region being associated with the pump inlet.

The fluid can be a liquid such as water or gas, e. g. air or nitrogen. The inflatable element may comprise for instance an inflatable gas bag. The described inflatable element and in particular the inflatable gas bag may allow for realizing the above mentioned pressure separation in an easy and effective manner.

According to a further embodiment of the invention the pressure separation device comprises an inflation means for inflating the inflatable element.

Upon activation with a suitable electric and/or mechanic control signal the inflation means may cause fluid to enter into the inflatable element such that at the end of this procedure it will be inflated and will separate the above mentioned high pressure region from the above mentioned low pressure region in a particular effective manner.

The inflation means may comprise a pressurized gas reservoir. Upon activation with a suitable electric and/or mechanic control signal a closed output of the pressurized gas reservoir may be opened such that pressurized gas streams into the inflatable element causing the inflatable element to expand and to provide the desired pressure separation capability.

According to a further embodiment of the invention the pressure separation device comprises a deflation means for deflating the inflatable element. This may allow to remove the separation between the high pressure region and the low pressure region in an automated manner. This may be of particular advantage when taking into account that the submersible pump and, accordingly, the (inflatable) pressure separation device, is located (well) below sea level such that a manual or non-automatic activation would be difficult.

Upon an activation of the deflating means, again with a suitable electric and/or mechanic control signal, the pressurized fluid being accommodated within the interior of the inflatable element, e. g. the above mentioned inflatable bag, can leave the inflatable element. This may be necessary in order to allow for a movement of the submersible pump prior to a maintenance of the submersible pump, which maintenance requires an extraction of the submersible pump from the riser pipe to a maintenance location above sea level. This location above sea level may be for instance a platform of an offshore wind turbine, the platform being attached to a tower of the wind turbine and/or to a transition piece of a wind turbine.

It will be easily understood that a deflation of the inflatable element will also reduce the friction between (i) the pressure separation device and its associated submersible pump and (ii) the inner surface of the riser pipe. Hence, when extracting the submersible pump (together with the deflated inflatable element) upwards above sea level a tension force exerted onto the wireline can be kept small.

In preferred embodiments the deflating means may comprise a needle element for perforating a membrane of the inflatable element. Upon perforation, the pressurized fluid can leave the interior of the inflatable element and the geometric structure of the inflatable element can collapse. As a result, the pressure separation is lost and the submersible pump can be extracted easily.

It is pointed out that a deflation with the described needle typically causes an irreversible destruction of the inflatable element. Hence, when during a first installation of the submersible pump system or after a successful above sea level maintenance a new submersible pump or the maintained submersible pump is (re)installed in the riser pipe, a new pressure separation device has to be used for providing the desired pressure separation. Also the new pressure separation device may comprise an inflatable element as described above.

According to a further embodiment of the invention the pump outlet is an outlet tube and the pressure separation device is placed around the outlet tube between the outlet tube and an inner surface of the riser pipe. This may provide the advantage that the pressure separation device can be easily placed at a proper position which allows for a simple and effective pressure separation.

According to a further embodiment of the invention the riser pipe comprises a least two pipe sections including a lower pipe section and an upper pipe section, which are arranged one next to the other along a longitudinal extension direction of the riser pipe. Thereby, the two pipe sections are (mechanically) connected with each other wherein a lower end of the upper pipe section is connected with an upper end of the lower pipe section.

The described division of the riser pipe into at least two different sections may provide the advantage that the submersible pump may be placed at a depth position well below sea level without requiring a very long riser pipe which is of course not easy to handle. Placing the submersible pump at a position well below sea level may provide the advantage, at least in some sea locations, that the pumped water is very clean and is in particular at least partially free from solid matter which could harm the submersible pump.

According to a further embodiment of the invention the wireline comprises a mechanical rope and an electric cable.

The mechanical rope may be made of any material and may have any thickness which allow for suspending the submersible pump in a reliable manner. Preferably, the mechanical rope and the entire wireline are so flexible that they can be coiled onto a suitable reel. This may facilitate a handling of the wireline in particular in case of large installation depths of the submersible pump.

The electric cable may comprise an appropriate number of wires. Some wires may be used for a power supply which may be needed e. g. for the submersible pump, the inflation means, etc. Other wires may be used for transmitting communication signals, e. g. for controlling the operation of the submersible pump and/or for an activation of the inflation and/or deflation means. Descriptively speaking, adding also some electric and/or electronic functionality to the wireline may provide the advantage that powering and/or controlling at least some of the electric devices which are located in the bottom section of the riser pipe can be realized in a simple but effective manner.

According to a further embodiment of the invention the submersible pump system further comprises at least one of the following components, which are all attached to the bottom section of the riser pipe: (A) a bottom plate, which mechanically supports the submersible pump; and (B) a mesh filter, which is positioned upstream of the pump inlet for filtering water sucked into the submersible pump.

(A) The bottom plate may be any suitable support basis onto which the submersible pump can be placed. Hence, the upper surface of the bottom plate may act as a seat for the submersible pump. The bottom plate can be mechanically and/or geometrically designed in an appropriate manner such that a stable position of the submersible pump within the riser pipe can be realized even under rough (underwater) sea conditions.

The bottom plate may be made from any appropriate material, e. g. (stainless) steel. In this case the bottom plate may have an opening or diaphragm in order to allow water entering the pump inlet.

The mesh filter may be used for filtering water which is sucked into the pump inlet. Thereby, at least a prefiltering of the water can be carried out such that sediments, particles or other kind of solid parts, which could harm the submersible pump, can be prevented from entering the interior of the submersible pump. This may provide the advantage that the lifetime of the submersible pump can be improved and/or the maintenance time intervals can be increased.

The mesh filter may comprise two or more meshes having a pore size that is gradually decreasing from an inlet side of the mesh being further down from the pump inlet to an outlet side of the mesh being closer to the pump inlet. In such a configuration, a successive filtering of the water can be achieved by filtering at first coarser particles and then finer particles. This may further reduce negative impacts for the submersible pump because of unwanted solid particles within the water.

According to a further embodiment of the invention the submersible pump system further comprises at least one fixation element for fixing the riser pipe to an external structure of the wind turbine, in particular to at least one of (i) a monopile, (ii) a transition piece, and (iii) a platform of the wind turbine.

The fixation elements may comprise at least one of pins, bolts, screws, nuts, and (rivet) bolts.

Using an appropriate number of fixation elements may provide the advantage that not only the riser pipe itself but also the entire submersible can be stabilized in a simple and effective manner. This may hold true even under rough sea conditions and in particular if the submersible pump system is fixed with more than just one fixation element. In this way the riser pipe (and the entire submersible pump system) may be very resilient against water waves, especially when the wind turbine is an offshore wind turbine.

According to a further embodiment of the invention the submersible pump system further comprises at least one of the following features: (A) the (above mentioned) lifting system for moving the wireline; (B) at least one guiding element for guiding, within the riser pipe, a movement of the wireline; and (C) a backflush device for opening a water channel connecting, upon activation, the pump outlet with the pump inlet.

The lifting system may comprise a driving actuator such as a motor which can provide a sufficient force and/or torque for moving the wireline in particular during an upwards movement. The motor may cause a wireline drum to rotate, onto which the wireline is coiled. The actuation of the drum may be accomplished by means of compressed air. Hence, the wireline drum may be denominated an "air operated electrical wire drum".

The lifting system may further comprise a gantry structure and a pulley fixed to the gantry structure. In this case the wireline is at least partially wound around the pulley and the pulley allows to change the direction of pulling force, which is exerted by the driving actuator into a direction which is collinear with the longitudinal extension direction of the riser pipe. Of course, the lifting system may also comprise more than one pulley.

The guiding element may be realized by means of any structural component which ensures that the wireline stays located at least approximately in the center of the riser pipe. Hence, the at least one guiding element may prevent a mechanical contact between the wireline and the inner sidewall of the riser pipe. Hence, an unwanted abrasion of the wireline and/or the riser pipe can be effectively prevented.

The described backflush device may comprise at least one valve which can be selectively opened and closed. The backflush device may be activated in case the pressure difference between the pump outlet and the pump inlet in no more needed. This may be the case for instance before the submersible pump system has to the moved upwards e. g. for maintenance purposes. Another reason for equalizing the pressure at the pump outlet with the pressure at the pump inlet may be a cleaning procedure of the above described mesh filter(s). In such a cleaning procedure the submersible pump may operate in a reverse direction such that a reverse water stream may remove particles captured before by means of the mesh filter(s) and transfer the captured particles back into the open water.

According to a further aspect of the invention there is provided a method for pumping upwards water being used by a wind turbine. Thereby, the pumping is carried out by means of a submersible pump system as described above.

The provided method is based on the idea that the above described submersible pump system is a very simple but effective system for realizing an appropriate pumping procedure of water upwards. As mentioned above, since the riser pipe itself is configured for transporting the water, the riser pipe may be free from any further (solid) tubing structure which has to carry the (transported) water and which may block or at least impede a movement of the submersible pump within the riser tube, when such a movement is necessary in particular prior to an above water level maintenance procedure of the submersible pump.

According to a further aspect of the invention there is provided a wind turbine, in particular an offshore wind turbine. Apart from usual components of a wind turbine such as e. g. a nacelle, a wind rotor, an electric generator, and an optional power converter the wind turbine comprises (inter alia) a submersible pump system as described above.

The provided wind turbine is based on the idea that the above described submersible pump system can provide water to the wind turbine in a reliable and effective manner. Thereby, operation costs of the submersible pump system may be kept low. This is because the submersible pump can be moved or transported within and along the riser pipe without the need of disassembling an additional (solid) tubing structure within the riser pipe which, as described above in detail, is necessary in prior art solutions for transporting water upwards to a location above sea level.

The water being transported upwards by means of the submersible pump system may be used, depending on the specific type of wind turbine, for different purposes. These purposes may be given also in any combination of these purposes.
(A) First of all, the water being transported upwards may be used for cooling at least one component of the wind turbine. A typical component which may need a cooling is the main electric generator of the wind turbine.
(B) The upwards transported water may also be used for generating hydrogen by means of water electrolysis. Thereby, the electrolysis may be carried out with an electrolysis device which can be located within, at, or close to the wind turbine. In this case the wind turbine may be called a hydrogen wind turbine. Of course, the required electronic power for carrying out the electrolysis may be provided preferably by the wind turbine.
(C) In case of an offshore wind turbine being erected in the sea with salty sea water surrounding the wind turbine, the salted water may be subjected a desalination procedure in order to produce fresh water. Again, the electric power needed for desalination may be provided by the wind turbine.

It has to be noted that embodiments of the invention have been described with reference to different subject matters. In particular, some embodiments have been described with reference to apparatus or system type claims whereas other embodiments have been described with reference to a method type claim. However, a person skilled in the art will gather from the above and the following description that, unless other notified, in addition to any combination of features belonging to one type of subject matter also any combination between features relating to different subject matters, in particular between features of the apparatus / system type claims and features of the method type claim is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a submersible pump system according to an embodiment of the present invention.
- Figure 2: shows a flow chart of a method for installing the submersible pump system.
- Figure 3: shows a flow chart of a method for removing the submersible pump from the riser pipe of the submersible pump system.
- Figure 4: shows a submersible pump system according to the state of the art.

### Detailed Description of the Drawings

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

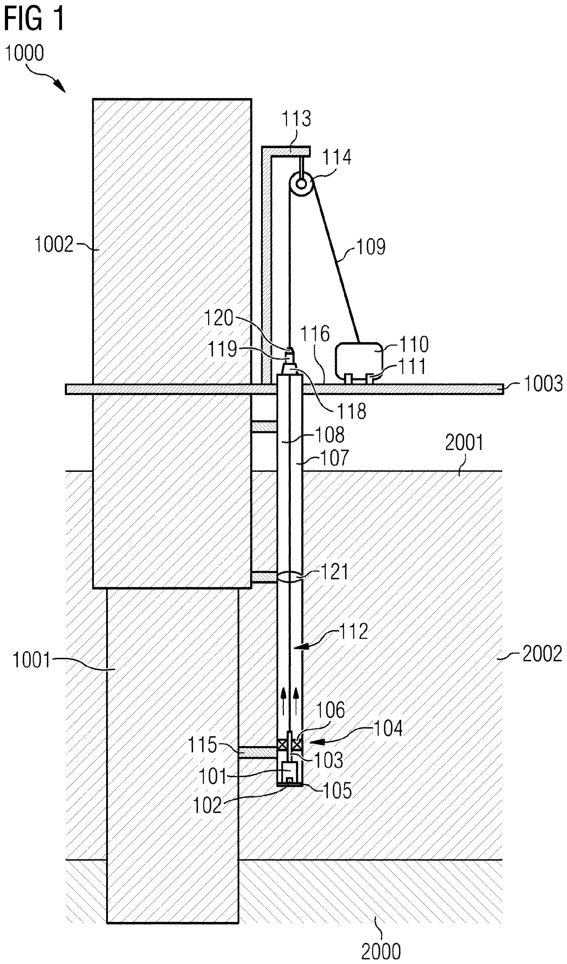

**Figure 1** shows a submersible pump system according to an embodiment of the present invention.

The submersible pump system is part of or is associated with an offshore wind turbine 1000 (not depicted completely). The wind turbine 1000 is erected in a known manner on a monopile 1001 driven into the sea floor 2000. Attached to the monopile 1001 there is so called transition piece 1002. The transition piece 1002 mechanically connects, in a known manner, a not depicted tower of the wind turbine 1000 with the monopile 1001. According to the embodiment described here the wind turbine comprises a platform 1003. As can be taken from Figure 4, the platform 1003 is attached to the transition piece 1002 and is located well above the sea level 2001. According to the exemplary embodiment described here the platform 1003 is located at a height of about 20 to 30 m above the sea level 2001.

For cooling purposes of the wind turbine 1000 and in particular for cooling a not depicted generator of the wind turbine 1000, seawater 2002 is used. Hence, the seawater must be pumped upwards first from the sea to the platform 1003. Second, the sea water must be pumped into a not depicted nacelle of the wind turbine 1000 wherein the generator is located. This second step of pumping is not depicted in Figure 1. To achieve the seawater pumping to the platform 1003, a submersible pump system is used.

According to the exemplary embodiment described here the submersible pump system comprises a submersible pump 101 having an inlet tube 102 and an outlet tube 103. The submersible pump 101 is accommodated inside a riser pipe 104 (or caisson 104). As can be taken from Figure 1, the submersible pump 101 is placed on a bottom plate 105. The bottom plate 105, which is attached to a bottom section of the riser pipe 104, represents a mechanical support for the submersible pump 101. According to the exemplary embodiment described here, the bottom plate 105 comprises a not shown opening which is aligned with the inlet tube 102 of the submersible pump 101. As can be taken from Figure 1, the submersible pump 101 and the bottom plate 105 are located well below the sea level 2001.

Although not shown in detail in Figure 1, directly below the bottom plate 105 there is provided a mesh filter with one or more different stages for filtering the sea water 2002 before it is sucked through the inlet tube 102 into the interior of the submersible pump 101. The mesh filter can capture debris, solid particles and the like such that they do not enter the interior of the submersible pump 101. Thereby, sensitive inner pump mechanics can be prevented from being clogged or damaged which may result in a damage of the submersible pump 101 or at least in a reduced service time of the submersible pump 101.

In preferred embodiments, the mesh filter has a plurality of filters stacked one over each other with mesh or pore sizes being bigger at a side further away from the pump inlet 102 and mesh or pore sizes being smaller at a side being closer to the pump inlet 102.

Furthermore, according to the exemplary embodiment described here the submersible pump system comprises a backflush device (not shown) with a pump bypass channel to ease a cleaning procedure of the mesh filter. Further, according to the embodiment described here, the submersible pump 101 is fixed to the bottom plate 105 by means of fixation elements (not shown), such as bolts or pins.

The submersible pump system further comprises a pressure separation device 106. According to the exemplary embodiment described here, the pressure separation device 106 is placed around the outlet tube 103 and fills the region between the outlet tube 103 and an inner surface 107 of the riser pipe 104. The pressure separation device 106 is configured to seal the volume of the riser pipe 104 being above the pressure separation device 106. Hence, the submersible pump 101 may generate within the riser pipe 104 a pressure difference between (i) the region above the pressure separation device 106 being associated with the pump outlet 103 and (ii) the region below the pressure separation device 106 being associated with the pump inlet 102. This pressure difference is the basic physical reason which allows water to be pumped upwards through the riser pipe 104 to a level of the platform 1003, being above the sea level 2001.

Although not shown in Figure 1, the submersible pump system may comprise two or more pressure separation devices , which are preferably all arranged around the outlet tube 103 at different height levels.

The submersible pump system further comprises a wireline 109. A first end of the wireline 109 is (detachably) attached to the submersible pump 101. An opposing second end of the wireline 109 is attached to a lifting system 110. In the embodiment shown in Figure 1, the lifting system comprises an air operated electrical wire drum (not shown), onto which the wireline 109 is coiled. As can be seen from Figure 1, the lifting system 110 is fixed to the platform 1003 by means of fixation means 111, such as, for example, bolts or pins.

In the present embodiment, the wireline 109 has two functions. A first function allows for transmitting electrical power and optionally electric control signals to the submersible pump 101. The second function is of a mechanic nature, namely to suspend the submersible pump 101 such that with a proper movement of the wireline 109 (i) the submersible pump 101 can be installed in respectively lowered into the riser pipe 104 and (ii) the submersible pump 101 can be extracted from the riser pipe 104. To protect the wireline 109 inside the riser pipe 104, a sheath 112 is placed around the wireline 109 within the riser pipe 104.

In the present embodiment, the lifting system 110 comprises or cooperates with a gantry 113 and a pulley 114. The wireline 109 is deflected or turned by the pulley 114 in order to ease the installation and the extraction of the submersible pump 101 from a mechanical point of view.

In the present embodiment, the riser pipe 104 is attached to the monopile 1001 and to the transition piece 1002 by means of several fixation elements. In Figure 1, only one of these fixations elements is denominated with a reference numeral 115. The fixation elements including the fixation element 115 are provided in order to fix the riser pipe 104 to the monopile 1001 and to the transition piece 1002 of the wind turbine 1000. Another fixation element 116 being located at the height level of the platform 1003 or being even a part of the platform is configured to fix an upper section 108 of the riser pipe 104 to the platform 1003. By means of these fixation elements 115, 116, the riser pipe 104 is very stable and steadfast.

To regulate and fine tune a tension of the wireline 109, a slip 118, a spider 119 and a wireline tension hanger 120 are provided. The slip 118 is placed on top of the upper end of the riser pipe 104. The slip can block a movement of the wireline 109. The spider 119 is placed on top of the slip 118 and serves to fine tune the tension of the wireline 109. The wireline tension hanger 120 is placed on top of the spider 119 and is capable of providing a fine tuning of the tension of the wireline 109.

In this context a wireline tension hanger is a per se known type of mechanical device that is used to suspend a tubing string or riser pipe in a wellbore. The wireline tension hanger is typically attached to a platform above the wellbore and is designed to hold the weight of the tubing and any other equipment that is attached to it. A tension hanger is usually made up of two main components: a hanger body and a tensioning system. The hanger body may be a cylindrical structure that is attached to the top of the tubing string, and is designed to fit securely into a corresponding receptacle in the platform. The tensioning system is used to apply a constant upward force on the hanger body, which in turn applies tension to the tubing string. This helps to ensure that the tubing string or here the riser pipe remains securely in place during water transport operations and can withstand the weight of any equipment that is attached to it.

Further, the submersible pump system according to the present embodiment has a guiding element 121 which is used for guiding, within the riser pipe 104, (a movement of) the wireline 109. According to the embodiment described here, the guiding element 121 is a so called bow type centralizer 121 being placed in the center of the riser pipe 104. The guiding element 121 is configured for providing more stability to the wireline 109 inside the riser pipe 104. In preferred embodiments, two or more guiding elements are provided.

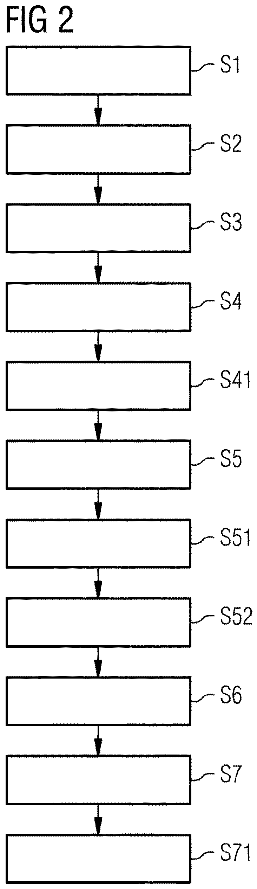

**Figure** 2 shows a diagram of a method for installing the submersible pump system according to an embodiment of the present invention.

The method comprises a step S1 of providing the riser pipe 104 with a bottom plate 105. As described above, the bottom plate 105 has a bottom opening for allowing pumped water to flow through the bottom plate 105.

In a further step S2, the submersible pump 101 is provided. As mentioned above, the submersible pump 101 comprises the inlet tube 102 and the outlet tube 103. Further, at least one pressure separation device 106 is installed around the outlet tube 103.

In a next step S3, a wireline 109 is provided. The wireline 109 has a first end connected to the submersible pump 101 and a second end connected to the lifting system 110 which itself is fixed on the platform 1003 of the wind turbine 1000 by means of the fixation means 111, such as bolts or pins.

In a next step S4, the riser pipe 104 is placed into the sea water 2002. As a result, the bottom plate 105 is located below sea level 2001.

Optionally, in a further step S41, the fixation elements 115, 116 are placed in order to better fix the riser pipe 104 to the monopile 1001 and to the transition piece 1002 .

In a next step S5, the submersible pump 101 being suspended by the wireline 109 is lowered by actuating the lifting system 110, until the submersible pump 101 is placed at the upper surface of the bottom plate 105.

Optionally, in a further step S51, the submersible pump 101 is fixed on the bottom plate 105 by means of fixation elements, such as bolts or pins. Thereby, the stability of the submersible pump 101 can be increased.

Also optionally, in a further step S52, the guiding element 121 is used for stabilizing (a movement of) the wireline 109 within the interior of the riser pipe 104.

In a further step S6, the pressure separation device 106, which comprises an inflatable element, is inflated for separating the volume of the riser pipe 104 into two regions. Thereby, (i) one upper region (above the pressure separation device 106 and being associated with the outlet tube 103) is a high pressure region and (ii) the other lower region (below the pressure separation device 106 and being associated with the outlet tube 103) is a low pressure region.

In a next step S7, the upper section 108 of the riser pipe 104 is attached to the platform 1003. Thereby, a further mechanical stabilization of the riser pipe may be achieved.

Optionally, in a further step S71, the slip 118, the spider 119 and/or the wireline tension hanger 120 are installed for stabilizing the wireline 109.

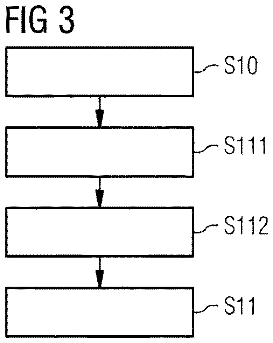

**Figure 3** shows a flow chart of a method for removing the submersible pump 101 from the riser pipe 104 of the submersible pump system.

In a first step S10, the lifting system 110 is provided and/or prepared such that it will be ready for use.

Optionally, after step S10, in a further step S101, the inflatable element of the pressure separation device 106 is deflated. This can be realized for example by means of a needle perforating a membrane between an inflated chamber of the inflatable element and the external environment. Thereby, an extraction of the submersible pump 101 will be facilitated.

In a next step S11, the wireline 109 is lifted with the lifting system 110. Thereby, so that the submersible pump 101 is getting extracted from the riser pipe 104.

It should be understood that if the submersible pump 101 has been fixed to the bottom plate 105 of the riser pipe 104 with fixation elements, such fixation elements have to be removed before the wireline 109 is lifted.

Further, in case the slip 118, the spider 119, the wireline tension hanger 120 and/or the guiding element 121 are used, in a next (optional) step S112 these elements have to be removed prior to lifting the wireline 109.

Once the submersible pump 101 is extracted from the riser pipe 104, it can be repaired, serviced and/or substituted. To again place the submersible pump 101 inside the bottom of the riser pipe 104, steps S5 to S7 as elucidated with reference to Figure 3 are to be repeated. However, with regard to step S6 and if the inflatable element 106 of the pressure separation device 106 has been deflated prior to extraction of the submersible pump 101, a new pressure separation device 106 must be provided and placed around the outlet tube 103 of the submersible pump 101.

Independent of the grammatical term usage, individuals with male, female or other gender identities are included within the term.

## Claims

1. Submersible pump system for pumping upwards water being used by a wind turbine, in particular seawater (2002) being used by an offshore wind turbine, the submersible pump system comprising
a submersible pump (101) having a pump inlet (102) and a pump outlet (103);
a riser pipe (104) for transporting upwards the water (2002), wherein
the submersible pump (101) is accommodated within a bottom section of the riser pipe (104); and
a wireline (109) with a first end and a second end, the first end being connected to the submersible pump (101) and the second end being connectable to a lifting system (110); wherein
the riser pipe (104) and the submersible pump (101) are dimensioned such that with the help of the wireline (109) the submersible pump (101) can be moved within the riser pipe (104) upwards and downwards.

2. The submersible pump system as set forth in the preceding claim, wherein
the bottom section of the riser pipe (104) is configured for maintaining a pressure difference between the pump outlet (103) and the pump inlet (102).

3. The submersible pump system as set forth in the preceding claim, wherein
the bottom section of the riser pipe (104) comprises a pressure separation device (106).

4. The submersible pump system as set forth in the preceding claim, wherein
the pressure separation device (106) comprises an inflatable element.

5. The submersible pump system as set forth in the preceding claim, wherein
the pressure separation device (106) comprises an inflation means for inflating the inflatable element.

6. The submersible pump system as set forth in any one of the two preceding claims, wherein the pressure separation device (106) comprises a deflation means for deflating the inflatable element.

7. The submersible pump system as set forth in any one of the four preceding claims, wherein
the pump outlet is an outlet tube (103) and
the pressure separation device (106) is placed around the outlet tube (103) between the outlet tube (103) and an inner surface (107) of the riser pipe (104).

8. The submersible pump system as set forth in any one of the preceding claims, wherein
the riser pipe (104) comprises a least two pipe sections including a lower pipe section and an upper pipe section, which are arranged one next to the other along a longitudinal extension direction of the riser pipe (104).

9. The submersible pump system as set forth in any one of the preceding claims, wherein
the wireline (109) comprises a mechanical rope and an electric cable.

10. The submersible pump system as set forth in any one of the preceding claims, further comprising at least one of the following components, which are attached to the bottom section of the riser pipe:
(A) a bottom plate (105), which mechanically supports the submersible pump (101); and
(B) a mesh filter, which is positioned upstream of the pump inlet (102) for filtering water sucked into the submersible pump (101).

11. The submersible pump system as set forth in any one of the preceding claims, further comprising
at least one fixation element (115, 116) for fixing the riser pipe (104) to an external structure (1001, 1002, 1003) of the wind turbine (1000), in particular to at least one of a monopile (1001), a transition piece (1002), and a platform (1003) of the wind turbine (1000).

12. The submersible pump system as set forth in any one of the preceding claims, further comprising at least one of the following features:
(A) the lifting system (110) for moving the wireline (109) ;
(B) at least one guiding element (121) for guiding, within the riser pipe (104), a movement of the wireline (109); and
(C) a backflush device for opening a water channel connecting, upon activation, the pump outlet (103) with the pump inlet (102).

13. A method for pumping upwards water being used by a wind turbine (1000), where the pumping is carried out by means of a submersible pump system as set forth in any of the preceding claims.

14. A wind turbine (1000), in particular an offshore wind turbine, the wind turbine (1000) comprising a submersible pump system as set forth in any one of the preceding system claims.
